# EUROPEAN PATENT SPECIFICATION

(11) **EP 1 953 426 B1**
(45) Date of publication and mention of the grant of the patent: **17.10.2012**
(21) Application number: 08250186.7
(22) Date of filing: 15.01.2008
(51) Int. Cl.: F16H 61/662, B60W 30/18

(54) **Continuously variable transmission**
Stufenloses Getriebe
Transmission à variation continue

(30) Priority: 31.01.2007 JP 2007021240
(43) Date of publication of application: 06.08.2008
(73) Proprietor: Yamaha Hatsudoki Kabushiki Kaisha, Iwata-shi, Shizuoka 438-8501 (JP)
(72) Inventor: Asaoka, Ryousuke, Iwata-shi Shizuoka-ken 438-8501 (JP)
(74) Representative: Moreland, David

(56) References cited:
- EP-A2- 1 645 785
- GB-A- 2 159 218
- JP-A- 4 210 156
- JP-A- 62 108 306
- JP-A- 2001 282 304
- US-A- 5 993 338

## Description

### FIELD OF THE INVENTION

The present invention relates to a transmission, particularly a continuously variable transmission, a vehicle having the continuously variable transmission, and a control device and a control method for the continuously variable transmission.

### BACKGROUND TO THE INVENTION

Electronically-controlled continuously variable transmissions (hereinafter referred to as "ECVTs") are known. ECVTs can adjust the gear ratio irrespective of the engine speed. Therefore, ECVTs are widely used in vehicles such as scooters.

In an ECVT, in general, feedback control of the gear ratio between an input shaft and an output shaft is performed to achieve a target gear ratio. However, unintentional hunting in the gear ratio may occur because of changes over years in the characteristics of a slide mechanism of the ECVT, sensor output abnormalities, mismatches in the control gain due to individual differences among ECVTs, and so forth. In other words, the gear ratio may fluctuate or vibrate above and below a target gear ratio. Such hunting in the gear ratio may deteriorate the drivability of the vehicle. In addition, a large load may be placed on a gear ratio varying motor, deteriorating the gear ratio varying motor.

JP-B-Hei 8-23313, for example, discloses a method to control a motor for driving an exhaust control valve, in which the motor is temporarily stopped when the motor has hunted a predetermined number of times. It is conceivable to apply this technique to the gear ratio varying motor of an ECVT.

However, the gear ratio may not be at the target gear ratio when a gear ratio control means is temporarily stopped after a predetermined number of huntings of the gear ratio varying motor. That is, it may not be possible for the gear ratio to achieve the target gear ratio. In addition, a load may be placed on the input shaft and the output shaft of the ECVT during a period when the gear ratio control means is temporarily stopped, causing the gear ratio to deviate from the target gear ratio. In other words, applying the technique disclosed in JP-B-Hei 8-23313 to the gear ratio varying motor of an ECVT could not suitably control the ECVT, even if hunting could be suppressed to some degree. Thus, it is difficult to suppress hunting in the gear ratio of an ECVT by applying the technique disclosed in JP-B-Hei 8-23313.

US5993338 describes an apparatus for controlling a continuously variable transmission for an automotive vehicle that adjusts a gear ratio by bringing a pulley position of a primary pulley into agreement with a target position through a hydraulic system under feedforward and sliding mode control. In one embodiment, a control unit for the transmission comprises a gear ratio hunting monitor. The gear ratio hunting monitor monitors the hunting of the actual primary speed to determine whether gear ratio hunting is occurring or not. Specifically, the gear ratio hunting monitor determines if hunting is taking place by determining if a variable is above a reference value, wherein the variable is equal to a sum of the squares of the differences between an actual primary speed at each of N sampling cycles and the average primary speed. If gear ratio hunting is determined to be occurring then a non-linear feedback term gain k, used in the control of pressure applied to a primary pulley cylinder, is decreased.

The present invention has been made in view of the foregoing problem, and therefore has an object to suppress hunting in the gear ratio of an ECVT.

### SUMMARY OF THE INVENTION

Various aspects of the present invention are defined in the independent claims. Some preferred features are defined in the dependent claims.

Described herein for information is a transmission that includes a gear ratio change mechanism and a control section. The gear ratio change mechanism has an input shaft, an output shaft, and a motor. The motor continuously varies the gear ratio between the input shaft and the output shaft. The control section performs feedback control of the gear ratio to achieve a target gear ratio. The control section is configured to detect a hunting state of the gear ratio to reduce the output of the motor when a hunting state of the gear ratio is detected.

Also described herein is a vehicle that includes the gear ratio change mechanism.

A control device described herein by way of information controls a transmission including a gear ratio change mechanism having an input shaft, an output shaft, and a motor for continuously varying the gear ratio between the input shaft and the output shaft. The control device performs feedback control of the gear ratio to achieve a target gear ratio. The control device is configured to detect a hunting state of the gear ratio to reduce the output of the motor when a hunting state of the gear ratio is detected.

A control method described herein by way of information controls a transmission including a gear ratio change mechanism having an input shaft, an output shaft, and a motor for continuously varying the gear ratio between the input shaft and the output shaft. The control method includes: performing feedback control of the gear ratio to achieve a target gear ratio; and detecting a hunting state of the gear ratio to reduce the output of the motor when a hunting state of the gear ratio is detected.

Described herein by way of information is a transmission comprising:
a gear ratio change mechanism having an input shaft, an output shaft, and a motor for continuously varying a gear ratio between the input shaft and the output shaft; and
a control section for performing feedback control of the gear ratio to achieve a target gear ratio, and for detecting a hunting state of the gear ratio to reduce an output of the motor when a hunting state of the gear ratio is detected.

The control section may be adapted to reduce the output of the motor by reducing an upper limit of the output of the motor.

The control section is adapted to increment a count of huntings when the gear ratio, which exceeded one of an upper limit and a lower limit of a tolerable gear ratio range including the target gear ratio, exceeds the other of the upper and lower limits of the tolerable gear ratio range within a predetermined hunting detection period after exceeding the one of the upper and lower limits of the tolerable gear ratio range, in order to detect a hunting state of the gear ratio when the count of huntings reaches a predetermined number within a predetermined hunting counting period.

The predetermined number may be set to 2 or more.

After reducing the output of the motor, the control section may restore the output of the motor when the target gear ratio is changed.

After reducing the output of the motor and while the target gear ratio is not changed, the control section may restore the output of the motor when an integral of a difference between the target gear ratio and an actual gear ratio of the gear ratio change mechanism over a predetermined period exceeds a predetermined amount.

The control section may be configured to detect the gear ratio for any change therein when the output of the motor is restored, and to detect an abnormality in a case where no change in the gear ratio is detected.

The control section may reduce the output of the motor by performing pulse width modulation control of the motor to reduce a duty ratio of a voltage to be applied to the motor.

The gear ratio change mechanism may further comprise:
a primary sheave attached to the input shaft;
a secondary sheave attached to the output shaft; and
a belt wound around the primary sheave and the secondary sheave.

Described herein by way of information is a transmission comprising:
a gear ratio change mechanism having a motor for continuously varying a gear ratio, wherein the output of the motor is adapted to be limited during a hunting state of the gear ratio change mechanism.

It should be understood that the output of the motor is adapted to be limited by reducing the upper limit of said output, without reducing the output to zero.

Described herein by way of information is a vehicle comprising a transmission as described above.

Described herein by way of information is a control device for a transmission comprising a gear ratio change mechanism having an input shaft, an output shaft, and a motor for continuously varying a gear ratio between the input shaft and the output shaft,
wherein the control device is adapted to perform feedback control of the gear ratio to achieve a target gear ratio, and is configured to detect a hunting state of the gear ratio to reduce an output of the motor when a hunting state of the gear ratio is detected.

Described herein by way of information is a control method for a transmission comprising a gear ratio change mechanism having an input shaft, an output shaft, and a motor for continuously varying a gear ratio between the input shaft and the output shaft, the control method comprising:
performing feedback control of the gear ratio to achieve a target gear ratio; and
reducing an output of the motor when a hunting state of the gear ratio is detected.

The control method may comprise the step of detecting a hunting state of the gear ratio.

The present invention can suppress hunting in the gear ratio of an ECVT.

### BRIEF DESCRIPTION OF THE DRAWINGS

These and other aspects of the present invention will now be described, by way of example only, with reference to the accompanying drawings, in which:
FIG. 1 is a side view of a two wheeled motorized vehicle to which the present invention may be applied;
FIG. 2 is a partial cross sectional view of an engine unit as viewed from a side thereof;
FIG. 3 is a partial cross sectional view of the engine unit;
FIG. 4 is a block diagram illustrating a control system of the two wheeled motorized vehicle;
FIG. 5 is a block diagram illustrating sheave position control;
FIG. 6 is a block diagram illustrating control to restrict hunting in the gear ratio; and
FIG. 7 is a graph illustrating the detection of a hunting state of the gear ratio, in which:
FIG. 7(a) is a graph representing changes in the gear ratio;
FIG. 7(b) is a graph representing periods when the gear ratio is exceeding the upper limit of the tolerable gear ratio range;
FIG. 7(c) is a graph representing periods when the gear ratio is exceeding the lower limit of the tolerable gear ratio range;
FIG. 7(d) is a graph representing hunting counting periods; and
FIG. 7(e) is a graph representing the number of hunting detections during hunting state detection periods.

### DETAILED DESCRIPTION OF THE DRAWINGS

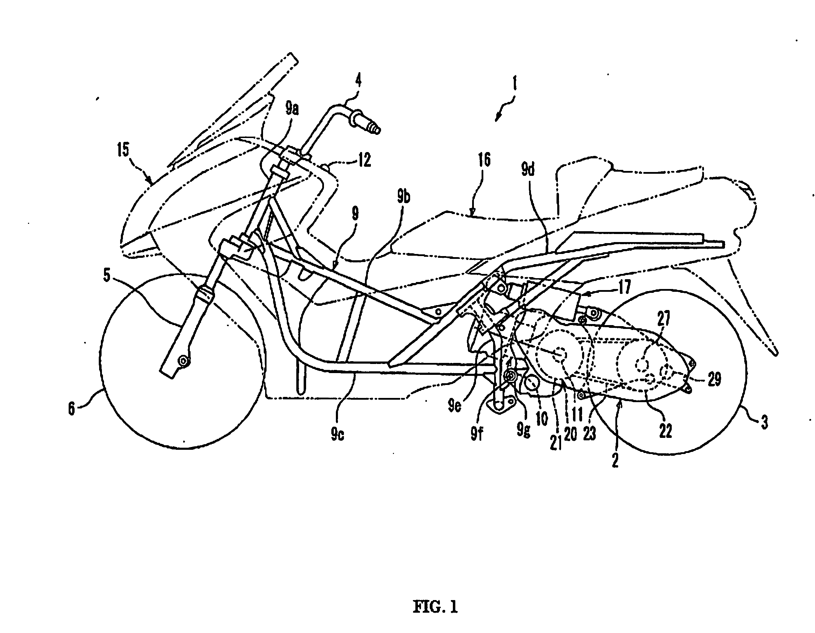

A detailed description will hereinafter be made of a preferred embodiment of the present invention used within a two wheeled motorized vehicle 1 shown in FIG. 1 as an example. A so-called scooter type is provided as an example of a vehicle in the description of this embodiment. However, the vehicle of the present invention is not limited to the scooter type two wheeled motorized vehicle. The vehicle of the present invention may be, for example, a non-scooter type two wheeled motorized vehicle. Specifically, the vehicle of the present invention may be an off-road type, motorcycle type, scooter type, or so-called moped type two wheeled motorized vehicle. In addition, the vehicle of the present invention may be a straddle type vehicle other than the two wheeled motorized vehicle. Specifically, the vehicle of the present invention may be, for example, an ATV (All Terrain Vehicle) or the like. Further, the vehicle of the present invention may be a vehicle other than the straddle type vehicle such as a four-wheeled vehicle.

FIG. 1 is a side view of the two wheeled motorized vehicle 1. The two wheeled motorized vehicle 1 includes a vehicle body frame 9, an engine unit 2 as a driving source unit, a rear wheel 3, and a front wheel 6.

The vehicle body frame 9 includes a head pipe 9a disposed at the front end of the vehicle body, an upper tube 9b, a down tube 9c, a seat rail 9d, and a vertical frame member 9e. Steering handlebars 4 are attached to the upper end of the head pipe 9a and a front fork 5 is connected to the lower end of the head pipe 9a. A front wheel 6 is rotatably attached to the distal end of the front fork 5. The front wheel 6 is not connected to the engine unit 2. In other words, the front wheel 6 is a driven wheel.

The down tube 9c extends obliquely rearward and downward from the head pipe 9a. The down tube 9c is bent at its intermediate portion to extend rearward and generally horizontally therefrom. The upper tube 9b extends obliquely rearward and downward above the down tube 9c from the connection between the head pipe 9a and the down tube 9c. The seat rail 9d is connected to the generally horizontal portion of the down tube 9c. The seat rail 9d extends obliquely rearward and upward from the connection with the down tube 9c. The lower end of the upper tube 9d is connected to the seat rail 9d. An intermediate portion of the seat rail 9d and the rear end of the down tube 9c is coupled via the vertical frame member 9e.

A vehicle body cover or fairing 15 is provided to cover the vehicle body frame 9. A seat 16 for the rider to ride on is attached to the vehicle body cover 15. A caution lamp 12 is also attached to the vehicle body cover 15 at a position viewable by the rider riding on the seat 16.

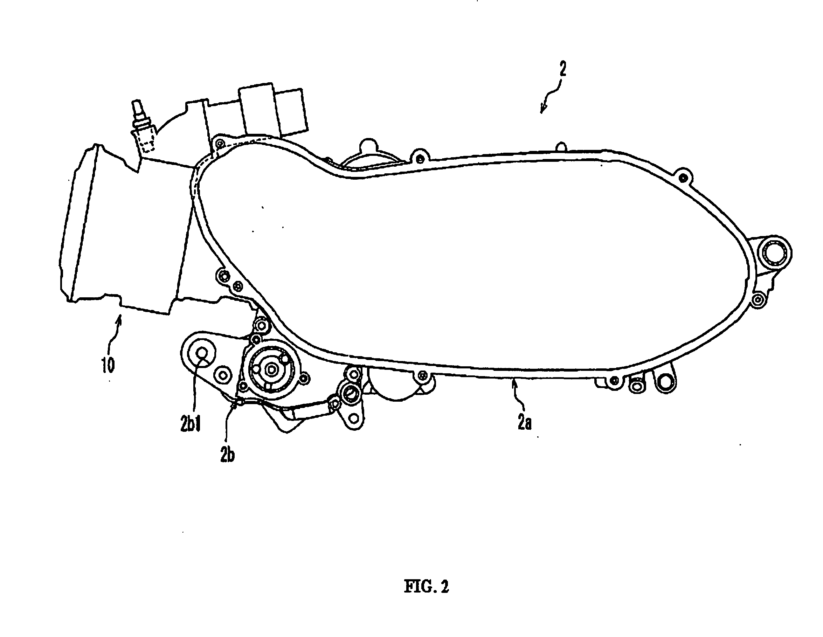

The engine unit 2 is directly attached to the vehicle body frame 9 so as to be pivotable. Specifically, as shown in FIG. 1, a pivot member 9f is attached to the vertical frame member 9e of the vehicle body frame 9. The pivot member 9f is formed in the shape of a cylinder extending in the vehicle width direction. A pivot shaft 9g extending in the vehicle width direction is attached to the pivot member 9f. On the other hand, as shown in FIG. 2, a pivot part 2b is formed at a front and lower portion of a housing 2a of the engine unit 2. The pivot part 2b is formed with a through hole 2b1 having generally the same inner diameter as that of the pivot member 9f. The pivot shaft 9g is rotatably inserted into the through hole 2b1.

As shown in FIG. 1, the engine unit 2 is connected to an intermediate portion of the seat rail 9d via a rear cushion or suspension unit 17. The rear cushion unit 17 suppresses oscillations of the engine unit 2.

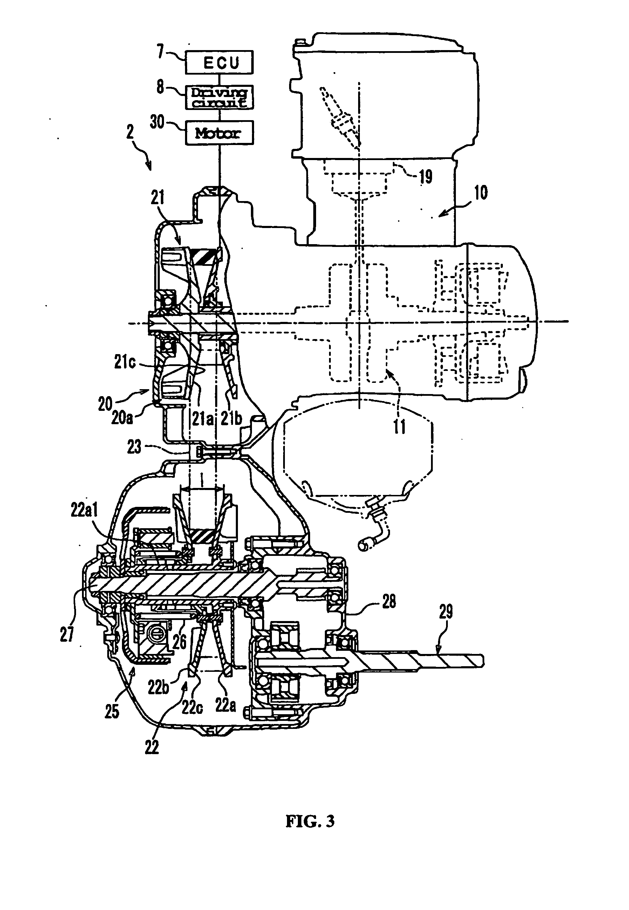

A description will now be made of the construction of the engine unit 2 with reference to FIG. 3.

As shown in FIG. 3, the engine unit 2 includes an engine 10 and a transmission 20. In the description of this embodiment, the engine 10 is a 4-cycle forced-air-cooled engine. However, the engine 10 may be another type of engine. The engine 10 may be, for example, a water-cooled engine. The engine 10 may be a 2-cycle engine. A driving source other than engines such as an electric motor may be provided in place of the engine 10. In other words, the driving source of the present invention is not limited to specific types.

As shown in FIG. 3, the engine 10 includes a crankshaft 11 coupled to a piston 19.

The transmission 20 is made up of a gear ratio change mechanism 20a, an ECU 7 as a control section, and a driving circuit 8 as a motor driving section. In the description of this embodiment, the gear ratio change mechanism 20a is a belt type ECVT. However, the gear ratio change mechanism 20a is not limited to a belt type ECVT. The gear ratio change mechanism 20a may be, for example, a toroidal type ECVT.

The gear ratio change mechanism 20a includes a primary sheave 21, a secondary sheave 22, and a V-belt 23. The V-belt 23 is wound around the primary sheave 21 and the secondary sheave 22. The V-belt 23 has a generally V-shaped cross section.

The primary sheave 21 rotates together with the crankshaft 11 as an input shaft. The primary sheave 21 includes a fixed sheave half 21a and a movable sheave half 21b. The fixed sheave half 21a is fixed to one end of the crankshaft 11. The movable sheave half 21b is disposed to oppose the fixed sheave half 21a so as to be displaceable in the axial direction of the crankshaft 11. The movable sheave half 21b is movable in the axial direction of the crankshaft 11. Respective opposing surfaces of the fixed sheave half 21a and the movable sheave half 21b form a belt groove 21c for receiving the V-belt 23. The belt groove 21c is wider toward the radially outer side of the primary sheave 21.

The width of the belt groove 21c of the primary sheave 21 is changed as a motor 30 drives the movable sheave half 21b in the axial direction of the crankshaft 11. In the description of this embodiment, the motor 30 is driven by pulse width modulation (PWM).

The secondary sheave 22 is disposed rearward of the primary sheave 21. The secondary sheave 22 is attached to a driven shaft 27 via a centrifugal clutch 25. Specifically, the secondary sheave 22 includes a fixed sheave half 22a, which is provided with a cylindrical output shaft 22a1 that is formed integrally therewith, and a movable sheave half 22b. The movable sheave half 22b opposes the fixed sheave half 22a. The fixed sheave half 22a is coupled to the driven shaft 27 via the centrifugal clutch 25. The movable sheave half 22b is movable in the axial direction of the driven shaft 27. Respective opposing surfaces of the fixed sheave half 22a and the movable sheave half 22b form a belt groove 22c for receiving the V-belt 23. The belt groove 22c is wider toward the radially outer side of the secondary sheave 22.

The movable sheave half 22b is urged by a spring 26 in the direction of reducing the width of the belt groove 22c. When the motor 30 is driven to reduce the width of the belt groove 21c of the primary sheave 21 and thus increase the winding diameter of the V-belt 23 around the primary sheave 21, the V-belt 23 is pulled toward the radially inner side of the secondary sheave 22. This causes the movable sheave half 22b to move in the direction of increasing the width of the belt groove 22c against the urging force of the spring 26. This in turn reduces the winding diameter of the V-belt 23 around the secondary sheave 22. As a result, the gear ratio of the gear ratio change mechanism 20a is changed.

The centrifugal clutch 25 is engaged and disengaged according to the rotational speed of the fixed sheave half 22a. Specifically, when the rotational speed of the fixed sheave half 22a is less than a predetermined rotational speed, the centrifugal clutch 25 is not engaged. Therefore, the rotation of the fixed sheave half 22a is not transmitted to the driven shaft 27. On the other hand, when the rotational speed of the fixed sheave half 22a is equal to or more than the predetermined rotational speed, the centrifugal clutch 25 is engaged. Therefore, the rotation of the fixed sheave half 22a is transmitted to the driven shaft 27.

A speed reduction mechanism 28 is coupled to the driven shaft 27. The driven shaft 27 is coupled to an axle 29 via the speed reduction mechanism 28. As shown in FIG. 1, the rear wheel 3 is attached to the axle 29 for rotation. Therefore, as the driven shaft 27 rotates, the axle 29 and the rear wheel 3 rotate together.

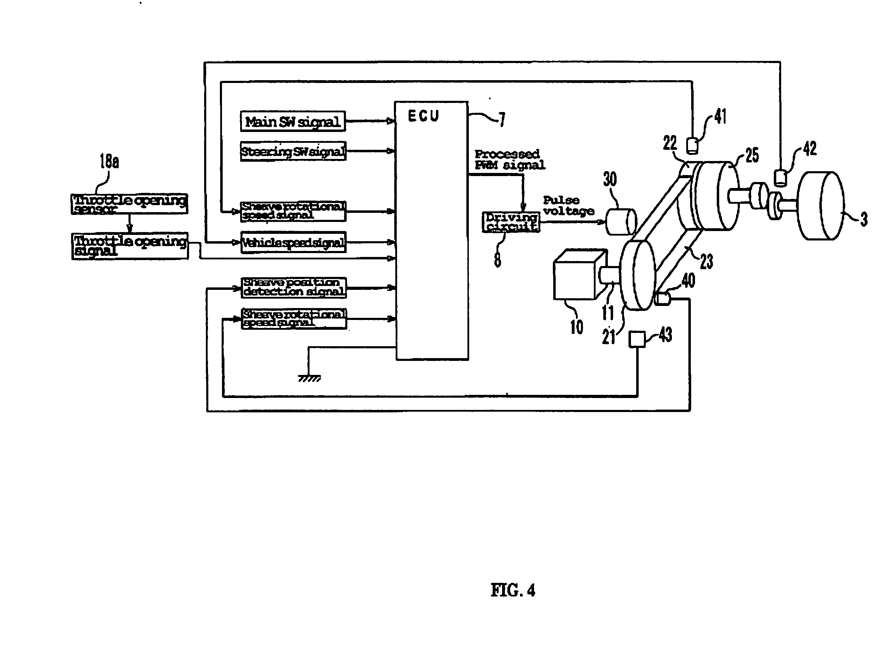

A detailed description will now be made of a control system of the two wheeled motorized vehicle 1 with reference to FIG. 4.

As shown in FIG. 4, a sheave position sensor 40 is connected to the ECU 7. The sheave position sensor 40 detects the position of the movable sheave half 21b of the primary sheave 21 relative to the fixed sheave half 21a (hereinafter referred to as "sheave position"). In other words, the sheave position sensor 40 detects the distance (1) between the fixed sheave half 21a and the movable sheave half 21b in the axial direction of the crankshaft 11. The sheave position sensor 40 outputs to the ECU 7 the detected distance (1) as a sheave position detection signal. The sheave position sensor 40 may be, for example, a potentiometer or the like.

To the ECU 7 are connected a primary sheave rotational speed sensor 43, a secondary sheave rotational speed sensor 41, and a vehicle speed sensor 42. The primary sheave rotational speed sensor 43 detects the rotational speed of the primary sheave 21. The primary sheave rotational speed sensor 43 outputs to the ECU 7 the detected rotational speed of the primary sheave 21 as a sheave rotational speed signal. The secondary sheave rotational speed sensor 41 detects the rotational speed of the secondary sheave 22. The secondary sheave rotational speed sensor 41 outputs to the ECU 7 the detected rotational speed of the secondary sheave 22 as a sheave rotational speed signal. The vehicle speed sensor 42 detects the rotational speed of the rear wheel 3. The vehicle speed sensor 42 outputs to the ECU 7 a vehicle speed signal based on the detected rotational speed.

A steering switch attached at the steering handlebars 4 shown in FIG. 1 is connected to the ECU 7. As shown in FIG. 4, the steering switch outputs a steering SW signal when the steering switch is operated by the rider.

A throttle opening sensor 18a outputs a throttle opening signal to the ECU 7 in the same way as described above.

The ECU 7 performs feedback control of the position of the movable sheave half 21b of the primary sheave 21 based on the vehicle speed signal and so forth. In other words, the ECU 7 performs feedback control of the distance (1) based on the vehicle speed signal and so forth.

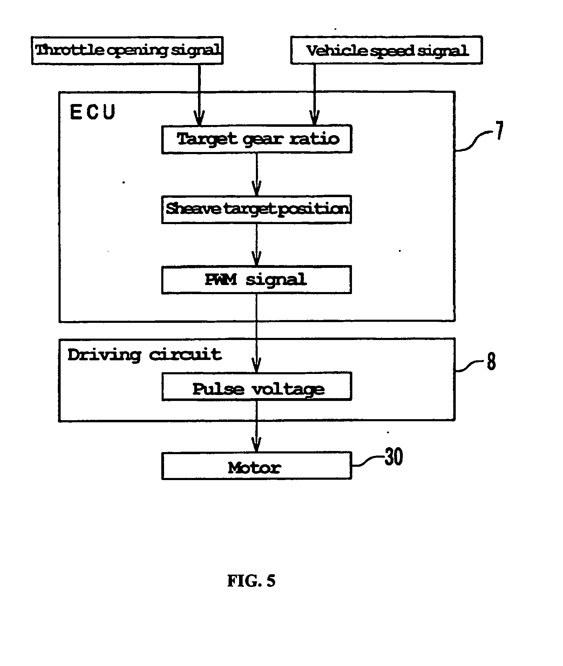

Specifically, as shown in FIG. 5, the ECU 7 determines a target gear ratio based on the throttle opening and the vehicle speed. The ECU 7 then calculates a sheave target position based on the determined target gear ratio. In other words, the ECU 7 calculates a target distance (1) between the movable sheave half 21b and the fixed sheave half 21a based on the determined target gear ratio. The ECU 7 outputs to the driving circuit 8 a pulse width modulation (PWM) signal in accordance with the current position of the movable sheave half 21b and the sheave target position. As shown in FIG. 5, the driving circuit 8 applies to the motor 30 a pulse voltage in accordance with the pulse width modulation signal. This drives the movable sheave half 21b to adjust the gear ratio of the transmission 20.

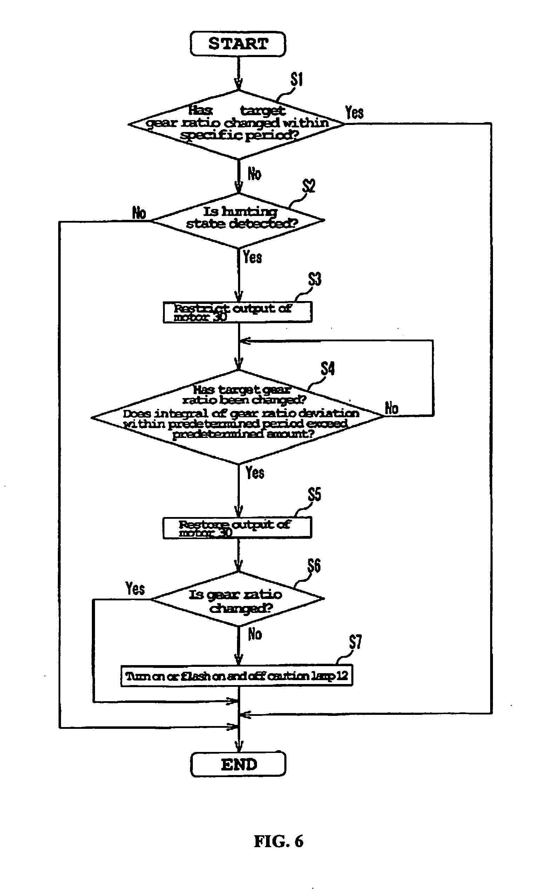

A description will now be made of the control to suppress hunting in the gear ratio in this embodiment with reference to FIG. 6. As shown in FIG. 6, first in step S1, it is determined whether or not the target gear ratio of the transmission 20 has been changed within a specific period. The "specific period" in step S1 may be set appropriately depending on the type or the like of the two-wheeled motorized vehicle 1. The "specific period" in step S1 may be set to about 100 msec to 1000 msec, for example. Specifically, the "specific period" in step S1 may be set to about 500 msec, for example.

If it is determined in step S1 that the target gear ratio of the transmission 20 has not been changed within the specific period, the process proceeds to step S2. In step S2, detection of a hunting state of the gear ratio of the transmission 20 is performed.

If a hunting state of the gear ratio of the transmission 20 is detected in step S2, the process proceeds to step S3. In step S3, the output of the motor 30 is restricted. The method to restrict the output of the motor 30 is not specifically limited. In the case where the motor 30 is controlled by PWM, as in this embodiment, the output of the motor 30 may be reduced by reducing the upper limit of the duty ratio of the pulse voltage to be applied to the motor 30 to reduce the upper limit of the output of the motor 30. Specifically, for example, the output of the motor 30 may be reduced by restricting the duty ratio of the pulse voltage to be applied to the motor 30 between 0% and 30%, in contrast between 0% and 100% before the restriction. The output of the motor 30 may alternatively be reduced by always reducing the duty ratio of the pulse voltage to be applied to the motor 30 by a specific proportion.

In the case where the motor 30 is controlled by pulse amplitude modulation (PAM), the output of the motor 30 may be reduced by reducing the upper limit of the magnitude of the pulse voltage to be applied to the motor 30. The output of the motor 30 may alternatively be reduced by always reducing the magnitude of the pulse voltage to be applied to the motor 30 by a specific proportion.

As shown in FIG. 6, step S3 is followed by step S4. In step S4, it is determined whether or not the target gear ratio of the transmission 20 has been changed, and whether or not the integral of the deviation between the target gear ratio and the actual gear ratio (hereinafter referred to as "gear ratio deviation") over a predetermined period exceeds a predetermined amount. If the target gear ratio of the transmission 20 has been changed, or if the integral of the gear ratio deviation over the predetermined period exceeds the predetermined amount, the process proceeds to step S5, where the output of the motor 30 is restored to that before the restriction in step S3.

Then, in step S6, it is determined whether or not the gear ratio is changed when the output of the motor 30 is restored in step S5. If it is determined in step S6 that the gear ratio is not changed, an abnormality of the gear ratio change mechanism 20a is detected and the process proceeds to step S7. Then, in step S7, the caution lamp 12 is turned on or flashed on and off.

The "predetermined period" and the "predetermined amount" in step S4 may each be set appropriately depending on the type or the like of the two-wheeled motorized vehicle 1. The "predetermined period" may be set to 10 seconds, for example.

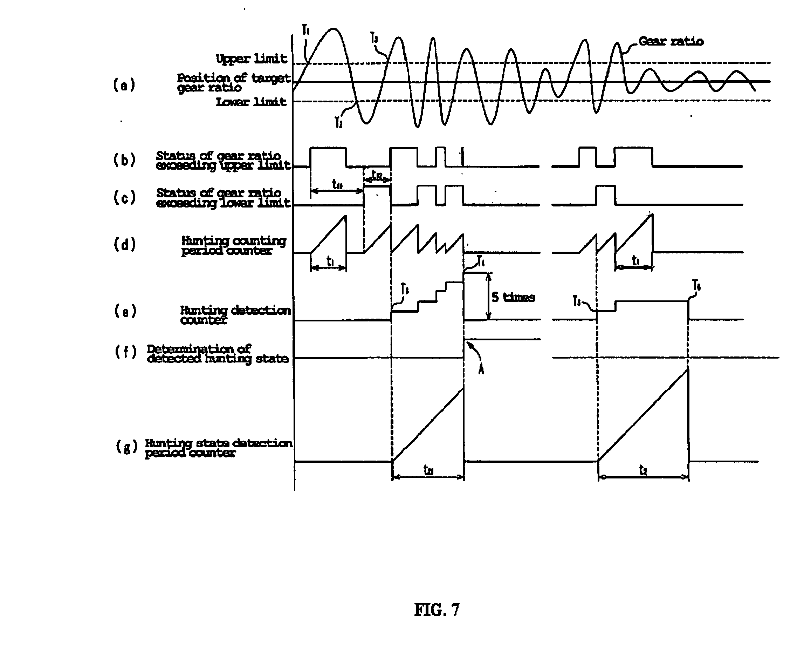

A detailed description will now be made of the method to detect a hunting state in step S2 with reference to FIG. 7. The hunting state detection method to be described here is merely an example. The hunting state detection method of the present invention is not limited to that to be described here.

In step S2, the count of huntings in the gear ratio is incremented in the case where the gear ratio exceeds one of the upper limit and the lower limit of a gear ratio range including the target gear ratio (hereinafter referred to as "tolerable gear ratio range") and then exceeds the other of the upper and lower limits of the tolerable gear ratio range within a predetermined hunting counting period t₁ after exceeding the one of the upper and lower limits of the tolerable gear ratio range. Here, the "predetermined hunting counting period t₁" may be set appropriately depending on the type or the like of the two-wheeled motorized vehicle 1. The "predetermined hunting counting period t₁" may be set to 20 msec, for example.

Then, in the case where the count of huntings within a predetermined hunting state detection period t₂ is incremented to a predetermined number or more, it is determined that the gear ratio is in a hunting state and the process proceeds to step S3. Here, the "predetermined hunting state detection period t₂" may be set appropriately depending on the type or the like of the two-wheeled motorized vehicle 1. The "predetermined hunting state detection period t₂" may be set to 50 msec, for example. The "predetermined number" of the count may also be set appropriately depending on the type or the like of the two-wheeled motorized vehicle 1. In this embodiment, the "predetermined number" is set to 2 or more. The "predetermined number" may be set to 5, for example.

A specific description will hereinafter be made of the example shown in FIG. 7. As shown in FIG. 7(a), after exceeding the upper limit of the tolerable gear ratio range at time T₁, the gear ratio exceeds the lower limit of the tolerable gear ratio range at time T₂. The period t₁₁ between the time T₁ and the time T₂ shown in FIG. 7(b) is more than the predetermined hunting counting period t₁ shown in FIG. 7 (d). Therefore, the variation in the gear ratio during the period t₁₁ is not counted as hunting.

On the other hand, as shown in FIG. 7(a), the period t₁₂ (see FIG. 7 (b)) from the time T₂ when the gear ratio exceeds the lower limit of the tolerable gear ratio range to time T₃ when the gear ratio exceeds the upper limit of the tolerable gear ratio range is not more than the predetermined hunting counting period t₁ shown in FIG. 7(d). Therefore, the variation in the gear ratio during the period t₁₂ is counted as one hunting as shown in FIG. 7(e). Then, when the count of huntings in the predetermined hunting state detection period t₂ shown in FIG. 7 (g) reaches the predetermined number, in this embodiment 5, it is determined that the gear ratio is in a hunting state. Specifically, since the period t₂₁ from the time T₃ when a first hunting is counted to time T₄ when a fifth hunting is counted is not more than the predetermined hunting state detection period t₂, it is determined at timing A shown in FIG. 7 (f) that the gear ratio is in a hunting state. On the other hand, only two huntings are counted during a period from time T₅ when a first hunting is counted to time T₆ when the predetermined hunting state detection period t₂ has elapsed after the time T₅. Therefore, it is not determined that the gear ratio is in a hunting state during the period from the time T₅ to the time T₆.

As has been described above, the output of the motor 30 is reduced when the gear ratio is in a hunting state. Therefore, the amplitude of the gear ratio can be reduced. As a result, a relatively small load is placed on the motor 30 when the motor is switched from forward rotation to reverse rotation and from reverse rotation to forward rotation. Hence, the deterioration of the motor 30 can be suppressed. In addition, the service life of the motor 30 can be extended. Further, suppressed hunting in the gear ratio can improve the drivability of the two-wheeled motorized vehicle 1.

In addition, since the motor 30 is not stopped in this embodiment, the gear ratio is prevented from deviating from the target gear ratio even after the detection of a hunting state of the gear ratio and the subsequent restriction of the output of the motor 30. From this point of view, the output of the motor 30 after the restriction is preferably large enough to suppress changes in the gear ratio.

It is not necessary to suppress the output of the motor 30 in the case where only either the upper limit or the lower limit of the tolerable gear ratio range is exceeded within the hunting state detection period t₂, or in the case where only one hunting has occurred within the predetermined hunting state detection period t₂. Reducing the output of the motor 30 even in such cases would slow down the tracking speed of the gear ratio to the target gear ratio in the case where the target gear ratio has been changed, and thus would not be preferable. In contrast, in this embodiment, it is determined that the gear ratio is in a hunting state only if a hunting state is detected a plurality of number of times within the hunting state detection period t₂. Therefore, it is possible to keep the tracking speed of the gear ratio to the target gear ratio relatively high in the case where the target gear ratio has been changed, while suppressing hunting in the gear ratio.

In addition, in this embodiment, variations in the gear ratio over such a relatively long period that the gear ratio does not exceed both the upper limit and the lower limit of the tolerable gear ratio range within the hunting counting period t₁ are not counted as hunting. In this way, both high drivability and effective reduction of the load to be placed on the motor 30 and a high tracking speed of the gear ratio to the target gear ratio can be achieved.

Specifically, variations in the gear ratio over a long period do not affect the drivability very much. Variations in the gear ratio over a long period also do not place a very large load on the motor 30. Therefore, it is less necessary to suppress variations in the gear ratio over a long period. In other words, suppressing variations in the gear ratio over a long period would not contribute very much to improving the drivability or reducing the load to be placed on the motor 30. Reducing the output of the motor 30 to suppress variations in the gear ratio over a long period would reduce the tracking speed of the gear ratio in the case where the target gear ratio has been changed, and thus would not be preferable. Thus, both high drivability and effective reduction of the load to be placed on the motor 30 and a high tracking speed of the gear ratio to the target gear ratio can be achieved by not counting variations in the gear ratio over a relatively long period as hunting as in this embodiment.

In this embodiment, the output of the motor 30 is restored in the case where the target gear ratio is changed in step S4 and step S5. Therefore, it is possible to keep the tracking speed of the gear ratio to the target gear ratio relatively high.

In the case where the integral of the gear ratio deviation within a predetermined period exceeds a predetermined amount, there may possibly occur an abnormality that the gear ratio change mechanism 20a is fixed, locked or the like. In the case of an abnormality of the gear ratio change mechanism 20a such as fixing or locking, for example, it may not be possible to change the gear ratio. Therefore, restoring the output of the motor 30 when the integral of the deviation between the target gear ratio and the gear ratio has exceeded a predetermined amount can apply a large torque to the gear ratio change mechanism 20a to unfix or unlock the gear ratio change mechanism 20a.

In addition, an abnormality of the gear ratio change mechanism 20a can be detected by detecting in step S6 whether or not the gear ratio is changed when the output of the motor 30 is restored, for example.

In the case where the integral of the gear ratio deviation within a predetermined period exceeds a predetermined amount, for example, it is highly possible that the gear ratio remains constant rather than becoming closer to the target gear ratio. The cause of the constant gear ratio distant from the target gear ratio might be that the output of the motor 30 is restricted to too low a level to displace the movable sheave half 21b, or that the movable sheave half 21b is substantially fixed to the crankshaft 11 or the like. In the case where the output of the motor 30 is restricted to too low a level to displace the movable sheave half 21b, for example, the gear ratio is changed when the output of the motor 30 is restored in step S5. On the other hand, in the case of an abnormality that the movable sheave half 21b is fixed to the crankshaft 11 or the like, the gear ratio is not changed even when the output of the motor 30 is restored in step S5. Thus, an abnormality of the gear ratio change mechanism 20a can be detected by determining in step S6 whether or not the gear ratio is changed when the output of the motor 30 is restored. The state where "the movable sheave half 21b is substantially fixed" includes the case where the resistance to the displacement of the movable sheave half 21b is so high that movement of the movable sheave half 21b is difficult, in addition to the case where the movable sheave half 21b is unable to displace.

In addition, if an abnormality of the gear ratio change mechanism 20a is detected, the caution lamp 12 is turned on or flashed on and off in step S7. This immediately notifies the rider of the abnormality of the gear ratio change mechanism 20a.

In this embodiment, the motor 30 is controlled by PWM. Therefore, power loss in the motor 30 can be made relatively small compared to the case where the motor 30 is controlled by PAM, for example.

Although the two wheeled motorized vehicle 1 of the so-called scooter type is taken up as an example in the description of the above embodiment, the vehicle of the present invention is not limited to the so-called scooter type two wheeled motorized vehicle. The vehicle of the present invention may be, for example, a non-scooter type two wheeled motorized vehicle. Specifically, the vehicle of the present invention may be an off-road type, motorcycle type, scooter type, or so-called moped type two wheeled motorized vehicle. In addition, the vehicle of the present invention may be a straddle type vehicle other than the two wheeled motorized vehicle. Specifically, the vehicle of the present invention may be, for example, an ATV (All Terrain Vehicle) or the like. Further, the vehicle of the present invention may be a vehicle other than the straddle type vehicle such as a four-wheeled vehicle.

The gear ratio change mechanism 20a is not limited to a belt type ECVT. The gear ratio change mechanism 20a may be, for example, a toroidal type ECVT. Hunting tends to occur especially in belt type ECVTs because of fluttering of the V-belt 23. Therefore, the present invention is effective especially for belt type ECVTs.

A determination as to whether or not the target gear ratio of the transmission 20 has been changed may only be made in step 4, so that the process proceeds to step S5 only if it is determined that the target gear ratio of the transmission 20 has been changed. In other words, a determination as to whether or not the integral of the deviation in the sheave position over a predetermined period exceeds a predetermined amount may be omitted in step S4.

The term "hunting state" refers to a state where two or more huntings occur continuously. The term "driving source" refers to a device that generates power. The "driving source" may be, for example, an internal combustion engine, an electric motor or the like.

The present invention is effectively applicable to ECVTs.

### Description of Reference Numerals and Symbols

1: two-wheeled motorized vehicle
2: engine unit
7: ECU (control section)
8: driving circuit
10: engine
11: crankshaft (input shaft)
12: caution lamp
20: transmission
20a: gear ratio change mechanism
21: primary sheave
21a: fixed sheave half
21b: movable sheave half
22: secondary sheave
22a1:output shaft
23: V-belt
30: motor

## Claims

1. A transmission (20) comprising:
a gear ratio change mechanism (20a) having an input shaft (11), an output shaft (22a1), and a motor (30) for continuously varying a gear ratio between the input shaft (11) and the output shaft (22a1); and
a control section (7) for performing feedback control of the gear ratio to achieve a target gear ratio, and for detecting a hunting state of the gear ratio to reduce an output of the motor (30) when a hunting state of the gear ratio is detected; wherein
the control section (7) increments a count of huntings when the gear ratio, which exceeded one of an upper limit and a lower limit of a tolerable gear ratio range including the target gear ratio, exceeds the other of the upper and lower limits of the tolerable gear ratio range within a predetermined hunting detection period (t2) after exceeding the one of the upper and lower limits of the tolerable gear ratio range, in order to detect a hunting state of the gear ratio when the count of huntings reaches a predetermined number within a predetermined hunting counting period (t1).

2. The transmission (20) according to claim 1,
wherein the control section (7) reduces the output of the motor (30) by reducing an upper limit of the output of the motor (30).

3. The transmission (20) according to claim 1,
wherein the predetermined number is set to 2 or more.

4. The transmission (20) according to any preceding claim,
wherein after reducing the output of the motor (30), the control section (7) restores the output of the motor (30) when the target gear ratio is changed.

5. The transmission (20) according to any preceding claim,
wherein after reducing the output of the motor (30) and while the target gear ratio is not changed, the control section (7) restores the output of the motor (30) when an integral of a difference between the target gear ratio and an actual gear ratio of the gear ratio change mechanism (20a) over a predetermined period exceeds a predetermined amount.

6. The transmission (20) according to claim 5,
wherein the control section (7) is configured to detect the gear ratio for any change therein when the output of the motor (30) is restored, and to detect an abnormality in a case where no change in the gear ratio is detected.

7. The transmission (20) according to any preceding claim,
wherein the control section (7) reduces the output of the motor (30) by performing pulse width modulation control of the motor (30) to reduce a duty ratio of a voltage to be applied to the motor (30).

8. The transmission (20) according to any preceding claim, wherein the gear ratio change mechanism (20a) further comprises:
a primary sheave (21) attached to the input shaft (11);
a secondary sheave (22) attached to the output shaft (22a1) ; and
a belt (23) wound around the primary sheave (21) and the secondary sheave (22).

9. A vehicle (1) comprising a transmission (20) according to any preceding claim.

10. A control device (7) for a transmission (20) comprising a gear ratio change mechanism (20a) having an input shaft (11), an output shaft (22a1), and a motor (30) for continuously varying a gear ratio between the input shaft (11) and the output shaft (22a1),
wherein the control device (7) is adapted to perform feedback control of the gear ratio to achieve a target gear ratio, and is configured to detect a hunting state of the gear ratio to reduce an output of the motor (30) when a hunting state of the gear ratio is detected; wherein
the control device (7) increments a count of huntings when the gear ratio, which exceeded one of an upper limit and a lower limit of a tolerable gear ratio range including the target gear ratio, exceeds the other of the upper and lower limits of the tolerable gear ratio range within a predetermined hunting detection period (t2) after exceeding the one of the upper and lower limits of the tolerable gear ratio range, in order to detect a hunting state of the gear ratio when the count of huntings reaches a predetermined number within a predetermined hunting counting period (t1).

11. A control method for a transmission (20) comprising a gear ratio change mechanism (20a) having an input shaft (11), an output shaft (22a1), and a motor (30) for continuously varying a gear ratio between the input shaft (11) and the output shaft (22a1), the control method comprising:
performing feedback control of the gear ratio to achieve a target gear ratio;
incrementing a count of huntings when the gear ratio, which exceeded one of an upper limit and a lower limit of a tolerable gear ratio range including the target gear ratio, exceeds the other of the upper and lower limits of the tolerable gear ratio range within a predetermined hunting detection period (t2) after exceeding the one of the upper and lower limits of the tolerable gear ratio range, in order to detect a hunting state of the gear ratio when the count of huntings reaches a predetermined number within a predetermined hunting counting period (t1); and
reducing an output of the motor (30) when a hunting state of the gear ratio is detected.

## Patentansprüche

1. Getriebe (20), das Folgendes umfasst:
einen Übersetzungsverhältnis-Wechselmechanismus (20a), der eine Antriebswelle (11), eine Abtriebswelle (22a1) und einen Motor (30) zum stufenlosen Verändern eines Übersetzungsverhältnisses zwischen der Antriebswelle (11) und der Abtriebswelle (22a1) hat, und
eine Regelungssektion (7) zum Durchführen einer Regelung des Übersetzungsverhältnisses, um ein Ziel-Übersetzungsverhältnis zu erreichen, und zum Erkennen eines Pendelzustandes des Übersetzungsverhältnisses, um eine Leistung des Motors (30) zu verringern, wenn ein Pendelzustand des Übersetzungsverhältnisses erkannt wird, wobei
die Regelungssektion (7) eine Pendelzahl erhöht, wenn das Übersetzungsverhältnis, das die eine von einer Obergrenze und einer Untergrenze eines zulässigen Übersetzungsverhältnisbereichs, der das Ziel-Übersetzungsverhältnis einschließt, überschritt, innerhalb eines vorbestimmten Pendelerkennungszeitraums (t2) nach dem Überschreiten der einen von der Ober- und der Untergenze des zulässigen Übersetzungsverhältnisbereichs die andere von der Ober- und der Untergenze des zulässigen Übersetzungsverhältnisbereichs überschreitet, um einen Pendelzustand zu erkennen, wenn die Pendelzahl innerhalb eines vorbestimmten Pendelzählungszeitraums (t1) eine vorbestimmte Anzahl überschreitet.

2. Getriebe (20) nach Anspruch 1,
wobei die Regelungssektion (7) die Leistung des Motors (30) durch das Verringern einer Obergrenze der Leistung des Motors (30) verringert.

3. Getriebe (20) nach Anspruch 1,
wobei die vorbestimmte Anzahl auf 2 oder mehr festgesetzt ist.

4. Getriebe (20) nach einem der vorhergehenden Ansprüche,
wobei nach dem Verringern der Leistung des Motors (30) die Regelungssektion (7) die Leistung des Motors (30) wiederherstellt, wenn das Ziel-Übersetzungsverhältnis verändert wird.

5. Getriebe (20) nach einem der vorhergehenden Ansprüche,
wobei nach dem Verringern der Leistung des Motors (30) und während das Ziel-Übersetzungsverhältnis nicht verändert wird, die Regelungssektion (7) die Leistung des Motors (30) wiederherstellt, wenn ein Integral einer Differenz zwischen dem Ziel-Übersetzungsverhältnis und einemtatsächlichen Übersetzungsverhältnis des Übersetzungsverhältnis-Wechselmechanismus (20a) über einen vorbestimmten Zeitraum ein vorbestimmtes Maß überschreitet.

6. Getriebe (20) nach Anspruch 5,
wobei die Regelungssektion (7) dafür konfiguriert ist, das Übersetzungsverhältnis auf jegliche Veränderung bei demselben hin zu erfassen, wenn die Leistung des Motors (30) wiederhergestellt ist, und in einem Fall, in dem keine Veränderung bei dem Übersetzungsverhältnis erkannt wird, eine Anomalie zu erkennen.

7. Getriebe (20) nach einem der vorhergehenden Ansprüche,
wobei die Regelungssektion (7) die Leistung des Motors (30) verringert durch das Ausführen einer Pulsbreitenmodulationsregelung des Motors (30), um ein Einschaltverhältnis einer an den Motor (30) anzulegenden Spannung zu verringern.

8. Getriebe (20) nach einem der vorhergehenden Ansprüche, wobei der Übersetzungsverhältnis-Wechselmechanismus (20a) ferner Folgendes umfasst:
eine Primärscheibe (21), die an der Antriebswelle (11) befestigt ist,
eine Sekundärscheibe (22), die an der Abtriebswelle (22a1) befestigt ist, und
einen Riemen (23), der um die Primärscheibe (21) und die Sekundärscheibe (22) gewickelt ist.

9. Fahrzeug (1), das ein Getriebe (20) nach einem der vorhergehenden Ansprüche umfasst.

10. Steuergerät (7) für ein Getriebe (20), das einen Übersetzungsverhältnis-Wechselmechanismus (20a) umfasst, der eine Antriebswelle (11), eine Abtriebswelle (22a1) und einen Motor (30) zum stufenlosen Verändern eines Übersetzungsverhältnisses zwischen der Antriebswelle (11) und der Abtriebswelle (22a1) hat,
wobei das Steuergerät (7) dafür eingerichtet ist, eine Regelung des Übersetzungsverhältnisses durchzuführen, um ein Ziel-Übersetzungsverhältnis zu erreichen, und dafür konfiguriert ist, einen Pendelzustand des Übersetzungsverhältnisses zu erkennen, um eine Leistung des Motors (30) zu verringern, wenn ein Pendelzustand des Übersetzungsverhältnisses erkannt wird, wobei
das Steuergerät (7) eine Pendelzahl erhöht, wenn das Übersetzungsverhältnis, das die eine von einer Obergrenze und einer Untergrenze eines zulässigen Übersetzungsverhältnisbereichs, der das Ziel-Übersetzungsverhältnis einschließt, überschritt, innerhalb eines vorbestimmten Pendelerkennungszeitraums (t2) nach dem Überschreiten der einen von der Ober- und der Untergenze des zulässigen Übersetzungsverhältnisbereichs die andere von der Ober- und der Untergenze des zulässigen Übersetzungsverhältnisbereichs überschreitet, um einen Pendelzustand zu erkennen, wenn die Pendelzahl innerhalb eines vorbestimmten Pendelzählungszeitraums (t1) eine vorbestimmte Anzahl überschreitet.

11. Regelungsverfahren für ein Getriebe (20), das einen Übersetzungsverhältnis-Wechselmechanismus (20a) umfasst, der eine Antriebswelle (11), eine Abtriebswelle (22a1) und einen Motor (30) zum stufenlosen Verändern eines Übersetzungsverhältnisses zwischen der Antriebswelle (11) und der Abtriebswelle (22a1) hat, wobei das Regelungsverfahren Folgendes umfasst:
das Durchführen einer Regelung des Übersetzungsverhältnisses, um ein Ziel-Übersetzungsverhältnis zu erreichen,
das Erhöhen einer Pendelzahl, wenn das Übersetzungsverhältnis, das die eine von einer Obergrenze und einer Untergrenze eines zulässigen Übersetzungsverhältnisbereichs, der das Ziel-Übersetzungsverhältnis einschließt, überschritt, innerhalb eines vorbestimmten Pendelerkennungszeitraums (t2) nach dem Überschreiten der einen von der Ober- und der Untergenze des zulässigen Übersetzungsverhältnisbereichs die andere von der Ober- und der Untergenze des zulässigen Übersetzungsverhältnisbereichs überschreitet, um einen Pendelzustand zu erkennen, wenn die Pendelzahl innerhalb eines vorbestimmten Pendelzählungszeitraums (t1) eine vorbestimmte Anzahl überschreitet, und
das Verringern einer Leistung des Motors (30), wenn ein Pendelzustand des Übersetzungsverhältnisses erkannt wird.

## Revendications

1. Transmission (20), comprenant :
un mécanisme de changement du rapport de transmission (20a), comportant un arbre d'entrée (11), un arbre de sortie (22a1) et un moteur (30) pour changer en continu un rapport de transmission entre l'arbre d'entrée (11) et l'arbre de sortie (22a1) ; et
une section de commande (7) pour assurer une commande asservie du rapport de transmission, pour établir un rapport de transmission cible, et pour détecter un état de pompage du rapport de transmission, afin de réduire une puissance de sortie du moteur (30) en cas de détection d'un état de pompage du rapport de transmission ; dans laquelle
la section de commande (7) accroît par incréments un comptage des pompages lorsque le rapport de transmission, ayant dépassé une limite, la limite supérieure ou la limite inférieure d'un intervalle de rapports de transmission tolérable, englobant le rapport de transmission cible, dépasse l'autre des limites supérieure ou inférieure de l'intervalle de rapports de transmission tolérable dans le cadre d'une période de détection d'un pompage prédéterminée (t2) après le dépassement d'une des limites supérieure ou inférieure de l'intervalle de rapports de transmission tolérable, en vue de détecter un état de pompage du rapport de transmission lorsque le comptage des pompages atteint un nombre prédéterminé dans le cadre d'une période prédéterminée de comptage des pompages (t1).

2. Transmission (20) selon la revendication 1,
dans laquelle la section de commande (7) réduit la puissance de sortie du moteur (30) en réduisant une limite supérieure de la puissance de sortie du moteur (30).

3. Transmission (20) selon la revendication 1,
dans laquelle le nombre prédéterminé est ajusté à 2 ou plus.

4. Transmission (20) selon l'une quelconque des revendications précédentes,
dans laquelle, après la réduction de la puissance de sortie du moteur (30), la section de commande (7) restaure la puissance du moteur (30) lorsque le rapport de transmission cible est changé.

5. Transmission (20) selon l'une quelconque des revendications précédentes,
dans laquelle, après la réduction de la puissance du moteur, le rapport de transmission cible n'étant pas changé, la section de commande (7) restaure la puissance de sortie du moteur (30) lorsqu'une intégrale d'une différence entre le rapport de transmission cible et un rapport de transmission effectif du mécanisme de changement du rapport de transmission (20a) dépasse pendant une période prédéterminée une valeur prédéterminée.

6. Transmission (20) selon la revendication 5,
dans laquelle la section de commande (7) est configurée de sorte à détecter le rapport de transmission pour un quelconque changement de celui-ci, lorsque la puissance de sortie du moteur (30) est restaurée, et à détecter une anormalité lorsqu'il n'y a pas de détection du changement du rapport de transmission.

7. Transmission (20) selon l'une quelconque des revendications précédentes, dans laquelle,
lorsque la section de commande (7) réduit la puissance de sortie du moteur (30) par une commande de modulation d'impulsions en largeur du moteur (30), pour réduire un rapport cyclique d'une tension devant être appliquée au moteur (30).

8. Transmission (20) selon l'une quelconque des revendications précédentes, dans laquelle le mécanisme de changement du rapport de transmission (20a) comrpend en outre :
une poulie à gorge primaire (21), fixée sur l'arbre d'entrée (11) ;
une poulie à gorge secondaire (22), fixée sur l'arbre de sortie (22a1) ; et
une courroie (23), enroulée autour de la poulie à gorge primaire (21) et de la poulie à gorge secondaire (22).

9. Véhicule (1), comprenant une transmission (20) selon l'une quelconque des revendications précédentes.

10. Dispositif de commande (7) pour une transmission (20), comprenant un mécanisme de changement du rapport de transmission (20a), comportant un arbre d'entrée (11), un arbre de sortie (22a1) et un moteur (30), pour changer en continu un rapport de transmission entre l'arbre d'entrée (11) et l'arbre de sortie (22a1) ;
le dispositif de commande (7) étant adapté pour assurer une commande asservie du rapport de transmission pour établir un rapport de transmission cible, et étant configuré de sorte à détecter un état de pompage du rapport de transmission, afin de réduire une puissance de sortie du moteur (30) lors de la détection d'un état de pompage du rapport de transmission ; dans laquelle
le dispositif de commande (7) accroît par incréments un comptage des pompages lorsque le rapport de transmission, ayant dépassé une limite, la limite supérieure ou la limite inférieure d'un intervalle de rapports de transmission tolérable, englobant le rapport de transmission cible, dépasse l'autre des limites supérieure ou inférieure de l'intervalle de rapports de transmission tolérable dans le cadre d'une période de détection prédéterminée des pompages (t2) après le dépassement de l'une des limites supérieure et inférieure de l'intervalle de rapports de transmission tolérable, en vue de détecter un état de pompage du rapport de transmission lorsque le comptage des pompages atteint un nombre prédéterminé dans le cadre d'une période de comptage prédéterminée des pompages (t1).

11. Procédé de commande d'une transmission (20), comprenant un mécanisme de changement du rapport de transmission (20a), comportant un arbre d'entrée (11), une arbre de sortie (22a1) et un moteur (30), pour changer en continu un rapport de transmission entre l'arbre d'entrée (11) et l'arbre de sortie (22a1), le procédé de commande comprenant les étapes ci-dessous :
exécution d'une commande asservie du rapport de transmission pour établir un rapport de transmission cible ;
accroissement par incréments d'un comptage des pompages lorsque le rapport de transmission, ayant dépassé une limite, la limite supérieure ou la limite inférieure d'un intervalle de rapports de transmission tolérable, englobant le rapport de transmission cible, dépasse l'autre des limites supérieure ou inférieure de l'intervalle de rapports de transmission tolérable dans le cadre d'une période de détection prédéterminée de détection des pompages (t2) après le dépassement de l'une des limites supérieure et inférieure de l'intervalle de rapports de transmission tolérable, en vue de détecter un état de pompage du rapport de transmission lorsque le comptage des pompages atteint un nombre prédéterminé dans le cadre d'une période de comptage prédéterminée des pompages (t1) ; et
réduction d'une puissance de sortie du moteur (30) lors de la détection d'un état de pompage du rapport de transmission.
